# EUROPEAN PATENT APPLICATION

(11) **EP 4 748 981 A1**
(43) Date of publication of application: **27.05.2026**
(21) Application number: 24841887.3
(22) Date of filing: 16.01.2024
(51) Int. Cl.: C40B 60/12, G01N 30/24

(54) **AUTOMATED SCREENING DEVICE AND AUTOMATED SCREENING PLATFORM**

(30) Priority: 20.07.2023 CN 202310901891; 20.07.2023 CN 202321932973 U
(71) Applicant: Wuxi Apptec (Shanghai) Co., Ltd., Pudong New Area, Shanghai 200131 (CN)
(72) Inventor: LIU, Chang, Shanghai 200131 (CN); ZHANG, Xiaoxing, Shanghai 200131 (CN); QIAN, Siqi, Shanghai 200131 (CN); LIU, Guangxia, Shanghai 200131 (CN); HU, Jiangyue, Shanghai 200131 (CN); MA, Shengbin, Shanghai 200131 (CN); WU, Aliang, Shanghai 200131 (CN); CHEN, Wenting, Shanghai 200131 (CN); XU, Xiaonan, Shanghai 200131 (CN); CUI, Weiren, Shanghai 200131 (CN); SU, Wenji, Shanghai 200131 (CN); KUAI, Letian, Shanghai 200131 (CN)
(74) Representative: Gille Hrabal Partnerschaftsgesellschaft mbB Patentanwälte
(86) International application number: PCT/CN2024/072591
(87) International publication number: WO 2025/015880

(57) **Abstract**

The present invention provides an automated screening device and an automated screening platform. The automated screening device comprises a bottom plate, a flow distribution plate, a liquid storage mechanism, an injection mechanism, and a switching mechanism; a mounting hole is formed in the bottom plate; the flow distribution plate is fixed on the bottom plate, and the flow distribution plate is provided with a first flow structure and a plurality of second flow structures surrounding the first flow structure; the liquid storage mechanism is fixed on the flow distribution plate, and a first cavity, an incubation cavity and a plurality of functional cavities are formed in the liquid storage mechanism; the injection mechanism is arranged in the first cavity; the switching mechanism is arranged in the mounting hole and can rotate in the mounting hole, and the switching mechanism can rotate to a position of being in communication with the first flow structure and any second flow structure. The automated screening device of the embodiments does not require manual sample transfer, effectively reducing experimental result errors caused by manual operation; and the cavities in the liquid storage mechanism are closed spaces, reducing the risk of sample contamination.

## Description

The present application claims priority of the following patent applications:
a prior application with the patent application No. "202310901891.7" entitled "AUTOMATIC SCREENING DEVICE AND AUTOMATIC SCREENING PLATFORM" and filed with China National Intellectual Property Administration on July 20, 2023;
a prior application with the patent application No. "202321932973.X" entitled "AUTOMATIC SCREENING DEVICE AND AUTOMATIC SCREENING PLATFORM" and filed with China National Intellectual Property Administration on July 20, 2023,
which are incorporated herein by reference in their entirety.

### TECHNICAL FIELD

The present invention relates to the field of DNA-encoded library (DEL) screening or drug screening, and in particular to an automated screening device and an automated screening platform.

### BACKGROUND

Drug discovery from target screening to final market approval, requires a quite lengthy process and cumbersome steps. Among them, target screening and identification, as the starting point for drug discovery, are particularly important for the entire process. Therefore, methods capable of rapid and efficient target screening and identification have become the key to accelerating and improving the efficiency of drug discovery.

DNA-encoded library (DEL) screening technology is a high-throughput drug discovery technology, the basic principle of which is combining a large-scale compound library with DNA molecules by using DNA encoding technology to form a DNA-encoded compound library, and then screen the interaction between proteins and encoded compounds to select compounds with high affinity and selectivity. The DEL screening technology can effectively shorten the drug discovery period and reduce the research and development cost, and can quickly identify compounds with high affinity, providing a new approach for drug research and development. In drug discovery, the DEL technology is widely applied to the discovery of new drug targets, new drug molecules, optimization of existing drug molecules, and the like. For example, by screening a drug library, anti-cancer drug molecules with relatively high affinity can be found, or new ideas and methods can be provided for the treatment of certain diseases.

The feature of the DNA-encoded compound library is that each compound is linked, at the molecular level, to a specific DNA fragment that serves as a label for information related to the compound's structure. At present, the main method for screening a DNA-encoded compound library is that after an active target protein and a DNA-encoded compound library are incubated by manual experiments of researchers, compounds with strong affinity are enriched by binding to the protein, while those with weak affinity or no binding are removed by washing. Since each compound corresponds one-to-one with DNA-encoded information, the structural information of high-affinity compounds can be obtained through high-throughput sequencing technology. After resynthesizing compounds without DNA tags for activity verification and structural optimization, hit compounds are obtained. This solves the problem of difficulty in effectively identifying hit compounds when a large number of molecules are screened against targets simultaneously.

Currently, there are no automated equipment dedicated to DEL screening in the market. The screening experiments are mainly performed manually or by other equipment used for extraction and purification. On the one hand, performing experiments manually inevitably introduces user's handling errors, reduces the reproducibility of results, extends the time required for sample processing, and hinders the standardized operation of certain screening methods. On the other hand, the existing equipment are not fully compatible with certain application scenarios. Some screening protocols or conditions are relatively complex to implement with existing equipment, there is a relatively high risk of sample cross-contamination when processing a large number of samples, users are required to perform numerous handling steps, and other such factors.

### SUMMARY

An object of the present invention is to provide an automated screening device based on DEL technology, which is combined with a compatible automated screening platform to solve the problems raised in the background described above.

The present invention is aimed at addressing, at least to some extent, one of the technical problems in the DEL screening technology. To this end, the present invention provides an automated screening device comprising:
a liquid storage mechanism formed with a first cavity, an incubation cavity, and a plurality of functional cavities;
an injection mechanism provided with an injection cavity, wherein one end of the injection cavity is disposed in the first cavity;
a flow distribution mechanism connected to a lower surface of the liquid storage mechanism and configured to enable the injection cavity to be in communication with the incubation cavity or the functional cavity;
a switching mechanism connected to the flow distribution mechanism and cooperating with the flow distribution mechanism to enable the injection cavity to be in communication with the incubation cavity or the functional cavities through the flow distribution mechanism.

The automated screening device of the present invention transfers sample in various cavities through the injection mechanism. The whole device adopts a compact automated design and is adapted to a simple operating system, eliminating the need for manual sample transfer, effectively reducing experimental result errors caused by manual operations, and increasing reproducibility; moreover, the cavities in the liquid storage mechanism are all closed spaces, experimental samples and reagents are integrated inside a single liquid storage mechanism, and do not expose to environment during the operation, thus reducing the risk of sample contamination.

According to the automated screening device of the present invention, the flow distribution mechanism comprises a bottom plate and a flow distribution plate disposed between the base plate and the liquid storage mechanism; the switching mechanism cooperates with the flow distribution plate to enable the injection cavity to be in communication with the incubation cavity or the functional cavities through the flow distribution mechanism.

According to the automated screening device of the present invention, the base plate is formed with a mounting hole; the switching mechanism is disposed in the mounting hole and capable of rotating in the mounting hole, and the switching mechanism is capable of rotating to enable the injection cavity to be in communication with the incubation cavity or the functional cavity through the flow distribution disk.

According to the automated screening device of the present invention, the flow distribution plate has a first flow distribution structure and multiple second flow distribution structures surrounding the first flow distribution structure; the injection cavity is communicated with the first flow distribution structure, the incubation cavity is communicated with one of the second flow distribution structures, and the remaining second flow distribution structures are communicated with the plurality of functional cavities in a one-to-one correspondence; the switching mechanism can rotate to communicate the first flow distribution structure with any one of the second flow distribution structures.

According to the automated screening device of the present invention, a sealing plate is disposed between the flow distribution plate and the bottom plate, and the sealing plate is provided with a third flow distribution structure and multiple fourth flow distribution structures surrounding the third flow distribution structure; the third flow distribution structure is communicated with the first flow distribution structure in a corresponding manner, and the plurality of fourth flow distribution structures are communicated with multiple second flow distribution structures in one-to-one correspondence;
the switching mechanism enables the first flow distribution structure to be in communication with any one of the second flow distribution structures by communicating the third flow distribution structure with any one of the fourth flow distribution structures.

According to the automated screening device of the present invention, a width of the fourth flow distribution structure is less than or equal to that of the second flow distribution structure, and a length of the fourth flow distribution structure is less than or equal to that of the second flow distribution structure;
an end of the second flow distribution structure is drop-shaped, circular, or elliptical.

According to the automated screening device of the present invention, a clamping groove is formed in an upper end surface of the switching mechanism; a first end of the elongated groove is always in communication with the third flow distribution structure, and a second end of the elongated groove is capable of being in communication with any one of the fourth flow distribution structures.

According to the automated screening device of the present invention, a clamping groove for connecting a rotation module is formed in a lower end surface of the switching mechanism;
the switching mechanism is disposed on a switching mechanism base and is capable of rotating relative to the switching mechanism base; the switching mechanism base is disposed in the mounting hole.

According to the automated screening device of the present invention, the first flow distribution structure is a flow distribution hole or a flow distribution groove, and the second flow distribution structure is a flow distribution hole or a flow distribution groove.

According to the automated screening device of the present invention, the third flow distribution structure is a flow distribution hole or a flow distribution groove, and the fourth flow distribution structure is a flow distribution hole or a flow distribution groove.

According to the automated screening device of the present invention, the incubation cavity is provided separately, and an accommodation space is formed around the incubation cavity;
the plurality of functional cavities and the incubation cavity are arranged around the first cavity;
at least some of the functional cavities differ in dimension and volume.

According to the automated screening device of the present invention, the incubation cavity is covered with an incubation cavity rubber pad, and a first ventilation hole is provided on the incubation cavity rubber pad;
the multiple functional cavities are covered with a functional cavity rubber pad, and a plurality of second ventilation holes are provided on the functional cavity rubber pad, and the multiple second ventilation holes are in one-to-one correspondence with multiple functional cavities.

According to the automated screening device of the present invention, a filter membrane is disposed at a bottom of the incubation cavity, and the filter membrane is used for supporting a filler and filtering liquids.

According to the automated screening device of the present invention, the upper end surface of the switching mechanism is coated with at least one layer of a hydrophobic sealing material, and a surface of the flow distribution plate is coated with at least one layer of a hydrophobic sealing material.

The present invention further provides an automated screening platform comprising the automated screening device of the present invention, a rotating module, a driving mechanism, a temperature control module, and an electronic control module.

The present invention further provides an automated screening platform comprising:
the automated screening device;
a rotating module transmission connected to the switching mechanism to control the switching mechanism to rotate;
a driving mechanism capable of clamping the injection mechanism and driving the injection mechanism to inject a liquid into or aspirate liquids into or from the incubation cavity or the functional cavities;
a temperature control module capable of moving relative to the incubation cavity and configured to heat the incubation cavity; and
an electronic control module electrically connected to the rotation module, the driving mechanism, and the temperature control module to control the coordinated work of the rotation module, the driving mechanism, and the temperature control module.

Additional aspects and advantages of the present invention will be partially provided in the following description and, in part, will be apparent from the following description, or may be understood by practice of the present invention.

### BRIEF DESCRIPTION OF THE DRAWINGS

The accompanying drawings, which are incorporated into and constitute a part of the specification, showing the embodiments consistent with the present invention and are used in conjunction with the specification to explain the principles of the present invention.
FIG. 1 is a three-dimensional schematic diagram of an automated screening device according to an embodiment of the present invention.
FIG. 2 is an exploded schematic diagram of an automated screening device according to an embodiment of the present invention.
FIG. 3 is a three-dimensional schematic diagram of a switching mechanism according to an embodiment of the present invention.
FIG. 4 is a three-dimensional schematic diagram of an automated screening platform according to an embodiment of the present invention.

Reference numerals:
11-first cavity; 12-incubation cavity; 121-filter membrane; 13-functional cavity; 14-switching mechanism; 141-elongated slot; 142-clamping groove; 143-switching mechanism base; 15-injection mechanism; 16-incubation cavity rubber pad; 17-functional cavity rubber pad;
20-rotating module;
30-driving mechanism;
40-temperature control module;
50-electronic control module;
60-bottom plate; 61-mounting hole; 62-fastening screw;
70-flow distribution disk; 71-first flow distribution structure; 72-second flow distribution structure; 73-sealing plate; 731-third flow distribution structure; 732-fourth flow distribution structure;
90-liquid storage mechanism.

### DETAILED DESCRIPTION

The technical solutions of the present invention will be further described in detail below with reference to specific embodiments. It should be understood that the following embodiments are only exemplary illustrating and explaining of the present invention and should not be construed as limiting the protection scope of the present invention. All techniques implemented on the basis of the content described above of the present invention are covered within the scope intended to be protected by the present invention.

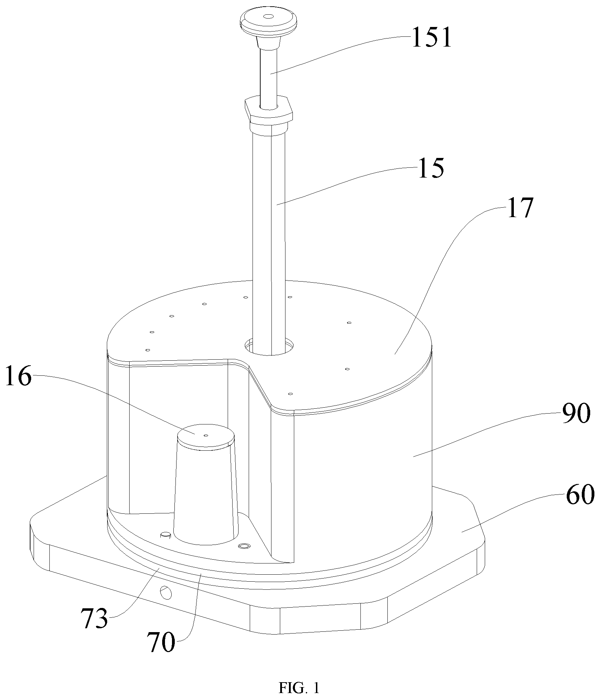

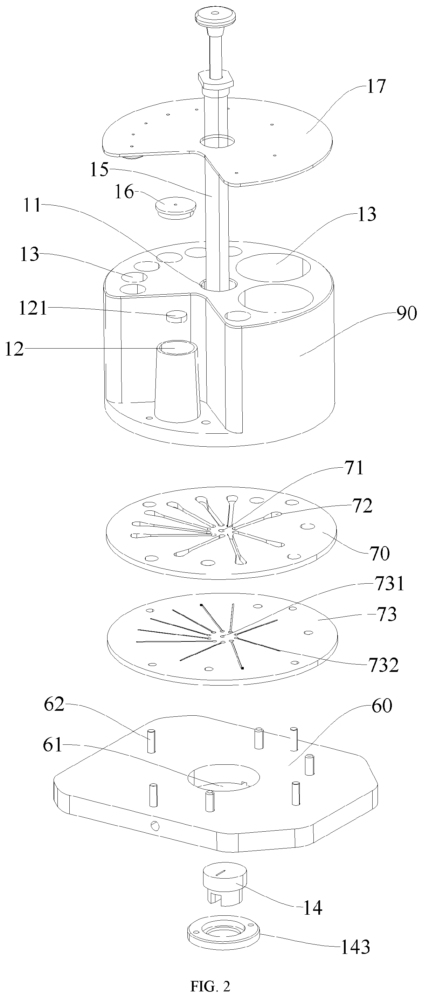

Referring to FIG. 1 and 2, the present embodiment provides an automated screening device, which mainly comprises a flow distribution mechanism, a liquid storage mechanism 90, an injection mechanism 15, and a switching mechanism 14.

The liquid storage mechanism 90 is formed with a first cavity 11, an incubation cavity 12, and multiple functional cavities 13; the injection mechanism 15 is disposed in the first cavity 11, and the first cavity 11 may serve as a mounting cavity of the injection mechanism 15. The injection mechanism 15 is provided with an injection cavity for injecting or aspirating liquids, and one end of the injection cavity is disposed in the first cavity 11; the flow distribution mechanism is connected to a lower surface of the liquid storage mechanism 90 and is configured to enable the injection cavity to be in communication with the incubation cavity 12 or the functional cavity 13, so that the injection cavity is capable of being in communication with the incubation cavity 12 or each of the functional cavities 13 through the flow distribution mechanism. The switching mechanism 14 is connected to the flow distribution mechanism and cooperates with the flow distribution mechanism to enable the injection cavity being in communication with the incubation cavity 12 or the functional cavities 13 through the flow distribution mechanism. The switching mechanism 14 is capable of changing the cavity communicated with the injection cavity, so that the flow distribution mechanism is capable of performing flow distribution according to experimental requirements.

There are various scenarios for the injection cavity to be in communication with the incubation cavity 12 or the functional cavity 13 through the switching mechanism 14. Specifically, the injection cavity may be in communication with only one cavity at the same time while being relatively sealed from other cavities, or may be in communication with two or more cavities at the same time. For example: when the injection cavity is communicated with the incubation cavity 12, the injection cavity is relatively sealed from all other functional cavities 13; when the injection cavity is communicated with a certain functional cavity 13, the injection cavity is relatively sealed from all other functional cavities 13 and the incubation cavity 12; in other embodiments, the injection cavity may also be configured to be in communication with two or more functional cavities 13 at the same time.

The automated screening device of the embodiments described above transfers sample liquid among various cavities through the injection mechanism 15. The whole device adopts a compact automated design and is adapted to a simple operating system, eliminating the need for manual sample transfer, effectively reducing experimental result errors caused by manual operations, and increasing reproducibility; moreover, the cavities in the liquid storage mechanism 90 are all closed spaces, experimental samples and reagents are integrated inside a single liquid storage mechanism 90, and do not come into contact with the outside during the operation, thus reducing the risk of sample contamination.

In some embodiments, the flow distribution mechanism comprises a bottom plate 60 and a flow distribution plate 70 disposed between the bottom plate 60 and the liquid storage mechanism 90; the switching mechanism 14 cooperates with the flow distribution plate 70 to enable the injection cavity to be in communication with the incubation cavity 12 or the functional cavities 13 through the flow distribution mechanism. The base plate 60 and the flow distribution disk 70 may be an integrated structure or a split structure.

The bottom plate 60 mainly plays a role in fixation and mounting, is the foundation of the entire device, and can be engaged with the screening device base, and the lateral sides and bottom of the screening device base comprise an engaging groove structure that assists the bottom plate 60 in being fixed to the adapted platform, so that the screening device can be clamped when mounted in the mounting groove and the screening device will not shake. The flow distribution plate 70 mainly plays a role in flow distribution, and the injection cavity is communicated with the incubation cavity 12 or the functional cavities 13 through the flow distribution plate 70.

In some embodiments, the bottom plate 60 is formed with a mounting hole 61; the switching mechanism 14 is disposed in the mounting hole 61 and capable of rotating in the mounting hole 61, and the switching mechanism 14 is capable of rotating to enable the injection cavity to be in communication with the incubation cavity 12 or the functional cavities 13 through the flow distribution plate 70.

Referring to FIG. 1 and 2, this embodiment provides an automated screening device mainly comprising a bottom plate 60, a flow distribution plate 70, a liquid storage mechanism 90, an injection mechanism 15, and a switching mechanism 14.

The liquid storage mechanism 90 is fixed on the flow distribution plate 70, and the liquid storage mechanism 90 is formed with a first cavity 11, an incubation cavity 12, and multiple functional cavities 13; the injection mechanism 15 is arranged in the first cavity 11 and is provided with an injection cavity. The flow distribution plate 70 is mainly configured for flow distribution, and the flow distribution plate 70 is fixed on the bottom plate 60. The switching mechanism 14 is disposed in the mounting hole 61 and capable of rotating in the mounting hole 61, and the switching mechanism 14 is capable of rotating to enable the injection cavity to be in communication with the incubation cavity 12 or the plurality of functional cavities 13 through the flow distribution plate 70. In other words, the switching mechanism 14 is provided with multiple rotational positions, and at different positions, the cavities communicated with the injection cavity are also different. Moreover, by rotating the switching mechanism 14, the injection cavity is capable of being in communication with any one of the functional cavities 13 and also with the incubation cavity 12, thereby achieving liquid flow between the two communicated cavities. The switching mechanism 14 may also, in a certain rotational position, make the injection cavity not be communicated with any cavity.

The switching mechanism 14 cooperates with the flow distribution plate 70 to enable the injection cavity to be in communication with the incubation cavity 12 or the functional cavity 13. There may be various implementation schemes for the structure that realizes the communication between the injection cavity and the incubation cavity 12 or the functional cavity 13, and those skilled in the art may design a specific communicating structure according to actual design requirements. Specific implementation of communicating structures will also be explained below, but this does not imply that they are the only achievable communicating structures.

The automated screening device of the embodiments described above transfers sample liquids among various cavities through the injection mechanism 15. The whole device adopts a compact automated design and is adapted to a simple operating system, eliminating the need for manual sample transfer, effectively reducing experimental result errors caused by manual operations, and increasing reproducibility; moreover, the cavities in the liquid storage mechanism 90 are all closed spaces, experimental samples and reagents are integrated inside a single liquid storage mechanism 90, and do not contact with the outside during the operation, thus reducing the risk of sample contamination. The screening device is capable of adapting to a variety of application scenarios, and may be adjusted accordingly based on different sample processing scenarios. A user may satisfy more flexible and detailed screening methods and customized services by assembling modularized operation processes.

Referring to FIG. 1 and 2, this embodiment provides an automated screening device mainly comprising a bottom plate 60, a flow distribution plate 70, a liquid storage mechanism 90, an injection mechanism 15, and a switching mechanism 14.

The bottom plate 60 is the foundation of the entire device, and can be engaged with the screening device base, and the lateral sides and bottom of the screening device base comprise an engaging groove structure that assist the bottom plate 60 in being fixed to the adapted instrument, so that the screening device can be clamped when mounted in the mounting groove and the screening device will not shake. The bottom plate 60 is formed with a mounting hole 61. The bottom plate 60 is further formed with a plurality of screw holes, and the plurality of screw holes are arranged around the mounting hole 61.

The flow distribution plate 70 is mainly configured for flow distribution, the flow distribution plate 70 is fixed on the base plate 60, and the flow distribution plate 70 is provided with a first flow distribution structure 71 and a plurality of second flow distribution structures 72 surrounding the first flow distribution structure 71; specifically, both the first flow distribution structure 71 and the plurality of second flow distribution structures 72 are through holes.

The liquid storage mechanism 90 is fixed on the flow distribution plate 70, and the liquid storage mechanism 90 is formed with a first cavity 11, an incubation cavity 12, and multiple functional cavities 13; the injection cavity is communicated with the first flow distribution structure 71; the incubation cavity 12 is communicated with one of the second flow distribution structures 72, specifically communicated with the outer end, i.e., the end away from the first flow distribution structure 71 of the second flow distribution structure 72; the remaining second flow distribution structures 72 are communicated with the plurality of functional cavities 13 in one-to-one correspondence, specifically communicated with the outer end, i.e., the end away from the first flow distribution structure 71 of the second flow distribution structure 72. Illustratively, central holes are formed at the centers of the bottoms of the first cavity 11, the incubation cavity 12, and multiple functional cavities 13, and the central holes are configured for the inflow and outflow of liquids.

The injection mechanism 15 is arranged in the first cavity 11 and is provided with an injection cavity. The injection mechanism 15 may comprise an injection push rod 151 with a piston. The piston is located in the injection cavity, and the injection push rod 151 drives the piston to move in the injection cavity, so as to suck the liquid in the incubation cavity 12 or the functional cavity 13 into the injection cavity or deliver the liquid in the injection cavity into the incubation cavity 12 or the functional cavities 13.

The switching mechanism 14 is disposed in the mounting hole 61 and is capable of rotating in the mounting hole 61. The switching mechanism 14 is capable of rotating to a position where the first flow distribution structure 71 is communicated with any one of the second flow distribution structures 72, thereby enabling the injection cavity to be in communication with the incubation cavity 12 or with any one of the functional cavities 13. When the injection cavity is communicated with the incubation cavity 12, the injection cavity and the incubation cavity 12 are sealed against other cavities, and the flow of the liquid between the injection cavity and the incubation cavity 12 can be controlled by the injection push rod 151; similarly, when the injection cavity is communicated with a certain functional cavities 13, the injection cavity and the certain functional cavities 13 are sealed against other cavities, and the flow of the liquid between the injection cavity and the certain functional cavities 13 can be controlled by the injection push rod 151.

By providing the flow distribution plate 70 with the first flow distribution structure 71 and multiple second flow distribution structures 72 and cooperating the flow distribution plate with the switching mechanism 14, convenient communication between the injection cavity and the incubation cavity 12 or the functional cavity 13 is achieved, with a good sealing effect of the communication and easy implementation.

In some embodiments, a sealing plate 73 is disposed between the flow distribution plate 70 and the bottom plate 60, and the sealing plate 73 is provided with a third flow distribution structure 731 and a plurality of fourth flow distribution structures 732 surrounding the third flow distribution structure 731; the third flow distribution structure 731 is communicated with the first flow distribution structure 71 in a corresponding manner, and multiple fourth flow distribution structures 732 are communicated with multiple second flow distribution structures 72 in one-to-one correspondence; the switching mechanism 14 enables the first flow distribution structure 71 to be in communication with any one of the second flow distribution structures 72 by communicating the third flow distribution structure 731 with any one of the fourth flow distribution structures 732. The sealing plate 73 is provided to improve the overall sealing performance of the screening device and avoid sample liquid leakage. Taking the injection of a liquid from the injection cavity into the incubation cavity 12 as an example, the flow path of the liquid is: flowing from the injection cavity into the first flow distribution structure 71, the third flow distribution structure 731, the fourth flow distribution structure 732, the second flow distribution structure 72, and the incubation cavity 12 in sequence.

Specifically, a width of the fourth flow distribution structure 732 is less than or equal to that of the second flow distribution structure 72, and a length of the fourth flow distribution structure 732 is less than or equal to that of the second flow distribution structure 72; an end of the second flow distribution structure 72 is drop-shaped, circular, or elliptical.

In some embodiments, the first flow distribution structure 71 is a flow distribution hole or a flow distribution groove, and the second flow distribution structure 72 is a flow distribution hole or a flow distribution groove; the third flow distribution structure 731 is a flow distribution hole or a flow distribution groove, and the fourth flow distribution structure 732 is a flow distribution hole or a flow distribution groove.

Illustratively, both the first flow distribution structure 71 and the third flow distribution structure 731 are flow distribution circular holes with the same inner diameter, the second flow distribution structure 72 is a flow distribution elongated hole, and the fourth flow distribution structure 732 is a flow distribution elongated groove.

In some embodiments, the bottom plate 60, the sealing plate 73, the flow distribution plate 70, and the liquid storage mechanism 90 are connected and fastened by fastening screws 62 to ensure the sealing performance after connection.

In some embodiments, the injection mechanism 15 may be a syringe-like component, which is detachably mounted in the first cavity 11, so that syringes of different specifications may be replaced as needed.

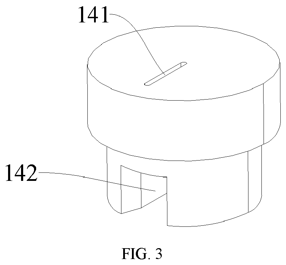

In some embodiments, referring to FIG. 3, the switching mechanism 14 may be specifically a switching valve. An elongated groove 141 is formed in an upper end surface of the switching mechanism 14; a first end of the elongated groove 141 is always connected to the third flow distribution structure 731, and a second end of the elongated groove 141 is capable of being connected to any one of the fourth flow distribution structures 732. Taking the injection of a liquid from the injection cavity into the incubation cavity 12 as an example, the flow path of the liquid is: flowing from the injection cavity into the first flow distribution structure 71, the third flow distribution structure 731, the elongated groove 141 on the switching mechanism 14, the fourth flow distribution structure 732, the second flow distribution structure 72, and the incubation cavity 12 in sequence.

Further, a clamping groove 142 configured for connecting to the rotation module 20 is formed on the lower end surface of the switching mechanism 14; the clamping groove 142 is adapted to be engaged with the rotation module 20, so that the switching mechanism is capable of rotating under the drive of the rotation module 20.

To further prevent leakage or mutual communication between different cavities, a switching mechanism base 143 is disposed at a bottom of the switching mechanism 14; the switching mechanism 14 is disposed on the switching mechanism base 143 and is capable of rotating relative to the switching mechanism base 143; the switching mechanism base 143 is disposed in the mounting hole 61.

In some embodiments, the incubation cavity 12 is provided separately, and an accommodation space is provided around the incubation cavity 12 to facilitate heating of the incubation cavity 12 by the temperature control module 40; specifically, two isolated protrusions are formed on the liquid storage mechanism 90, the incubation cavity 12 is formed inside one of the smaller protrusions, and the first cavity 11 and all the functional cavities 13 are formed inside the larger protrusion.

Spatially, the plurality of functional cavities 13 and the incubation cavity 12 are arranged around the first cavity 11; at least some of the functional cavities 13 differ in dimension and volume, that is to say, the functional cavities 13 may have a variety of specifications to meet different experimental requirements. The plurality of functional cavities 13 include at least one air exhaust cavity.

In some embodiments, an incubation cavity gasket 16 covers the incubation cavity 12, and a first ventilation hole is formed in the incubation cavity rubber pad 16; a functional cavity rubber pad 17 covers the plurality of functional cavities 13, multiple second ventilation holes are formed in the functional cavity rubber pad 17, and t multiple second ventilation holes correspond one-to-one with the plurality of functional cavities 13.

The incubation cavity rubber pad 16 and the functional cavity rubber pad 17 are configured for protecting the cavities; meanwhile, the ventilation holes formed on the rubber pads are configured for enabling the cavities to be in communication with the atmosphere when the injection mechanism 15 performs liquids aspiration or injection operations, so as to balance the air pressure between the cavities and the outside, thereby realizing smooth operation of the injection device.

In some embodiments, a filter membrane 121 is disposed at a bottom of the incubation cavity 12, and the filter membrane 121 is configured to support a filler and filter liquids.

In some embodiments, the upper end surface of the switching mechanism 14 is coated with at least one layer of a hydrophobic sealing material to achieve a sealing effect. A surface of the flow distribution plate 70 is coated with at least one layer of a hydrophobic sealing material to achieve a sealing effect.

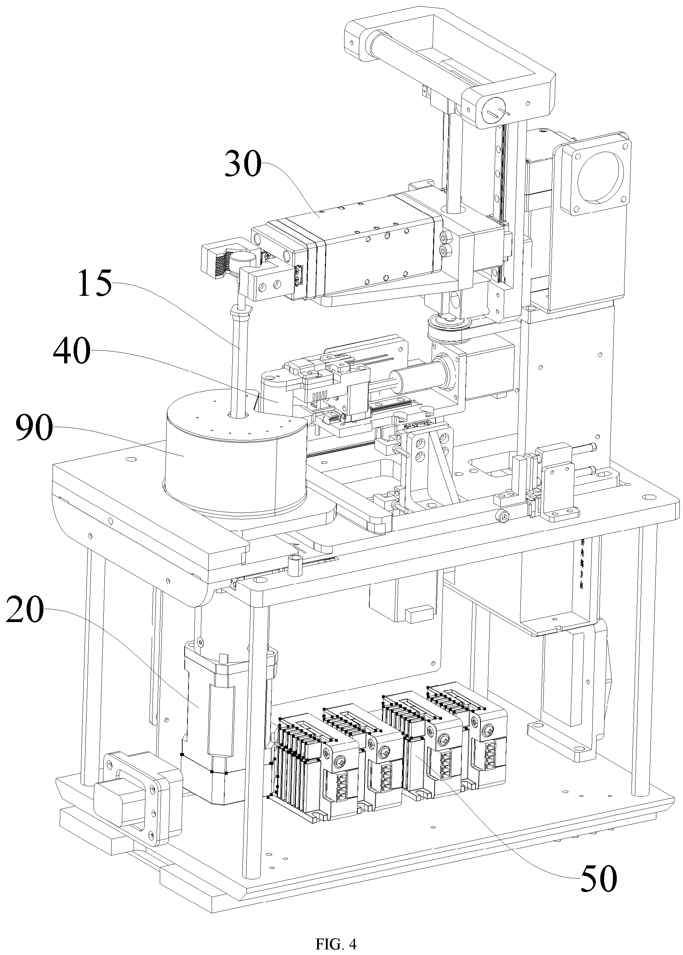

Referring to FIG. 4, this embodiment further provides an automated screening platform, which comprises the automated screening device according to any one of the embodiments described above, and further comprises a rotation module 20, a driving mechanism 30, a temperature control module 40, and an electronic control module 50. Since the automated screening platform comprises the automated screening device according to any one of the embodiments described above, all screening steps of the automated screening platform are integrated inside the liquid storage mechanism and rarely contact with the outside, reducing external contamination and component contamination; the switching mechanism 14 enables automation of processes such as washing, elution, and collection in the screening, and the entire experimental process is highly automated, making the experiment more standardized and unified.

Referring to FIG. 4, this embodiment further provides an automated screening platform, which comprises the automated screening device according to any one of the embodiments described above, a rotation module 20, a driving mechanism 30, a temperature control module 40, and an electronic control module 50. The rotation module 20 is in transmission connection with the switching mechanism 14 to control the switching mechanism 14 to rotate; the driving mechanism 30 is capable of clamping the injection push rod 151 of the injection mechanism 15 and driving the injection push rod 151 of the injection mechanism 15 to drive the piston to move in the injection cavity, thereby injecting a liquid into or aspirating liquid from the incubation cavity 12 or the functional cavity 13; the temperature control module 40 is capable of moving relative to the incubation cavity 12 and is configured to heat the incubation cavity 12; the electronic control module 50 is electrically connected to the rotation module 20, the driving mechanism 30, and the temperature control module 40 to control coordinated operation of the rotation module 20, the driving mechanism 30, and the temperature control module 40.

A screening method for the automated screening platform is provided below, which specifically comprises the following steps:
manually inject 5-40 µg of the target protein and 1-1.5 nmol of the DNA-encoded compound library required for screening into the incubation cavity 12 via a pipette or other equipment to complete sample loading, and activating the automated screening platform to perform the subsequent automated screening process;
specifically, pre-embedding the incubation cavity 12 with pretreated immobilized resin beads; adding 5-40 µg of the target protein and 1-1.5 nmol of the DNA-encoded compound library to the incubation cavity 12 via a pipette, performing mixed incubation in the incubation cavity 12 to immobilize the target on the immobilized resin beads in the incubation cavity, and simultaneously enabling the small-molecule compounds in the DNA-encoded compound library to bind to the target;
after completing the incubation, aspirating an incubation effluent by the injection mechanism 15, and sampling the incubation effluent into a reserved empty functional cavity 13;
when starting the washing process, aspirating a washing buffer from a functional cavity 13 containing the washing buffer, injecting the washing buffer into the injection cavity, then injecting the washing buffer from the injection cavity into the incubation cavity 12, and performing reciprocal pumping; aspirating a washing waste from the incubation cavity 12, injecting the washing waste into the injection cavity, and then injecting the washing waste from the injection cavity into a functional cavity 13 for containing a waste liquid to discard the washing waste, thereby completing one washing process; repeating the washing process multiple times to wash away the unbound small molecules by the washing buffer;
when starting an elution process, aspirating an eluent from another functional cavity 13 containing the eluent, injecting the eluent into the injection cavity, then injecting the eluent from the injection cavity into the incubation cavity 12; heating for a predetermined time to denature the target protein, dissociating the small molecules bound to the target, and making the small molecules enter the eluent; subsequently, injecting the eluent from the injection cavity into another functional cavity 13 for storing a sample; finally, recovering the small molecules in the eluent as the samples obtained after screening, thereby completing one elution process. This elution process may be repeated as necessary.

Further, in the embodiment described above, the target and the DNA-encoded compound library are incubated in the incubation cavity 12 at room temperature of 25 °C for 30 min-1 h; the immobilized resin beads are washed at least 6 times; the small molecules binding to the target are heated at 95 °C for 10 min to denature the target. After the screening experiment is completed, the screened sample is recovered and subjected to next generation sequencing (NGS) to determine the types of molecules obtained by screening.

The target protein can be changed according to experimental requirements, including but not limited to a protein, a ribonucleic acid (RNA), etc.

The immobilized resin beads required for immobilizing the target protein can be selected as needed, and the available immobilization methods include, but are not limited to, binding of a polyhistidine tag (His tag) to nickel-nitrilotriacetic acid (Ni-NTA), binding of biotin to avidin, binding of glutathione S-transferase (GST) to glutathione (GSH), and other methods.

The elution method may adopt a method of denaturing the target protein by heating, or adopt competitive elution using molecules with higher affinity for the immobilized groups. Due to technical characteristics, a large number of small-molecule compounds contained in the DNA-encoded compound library that do not bind to the target protein may cause background noise, and the screening experimental condition parameters can usually be verified by positive small molecules known to bind to the target protein.

Multiple rounds of screening can be performed to achieve multiple rounds of enrichment of bindable molecules and improve the signal-to-noise ratio. A new target protein may be added in the next round, and the molecules eluted in the previous round are used as input samples. Then the screening steps described above are repeated.

The automated screening platform of the embodiment described above integrates each operation step of a screening experiment, and the screening steps are all integrated inside the liquid storage mechanism and rarely come into contact with the outside, reducing external contamination and component contamination. The switching mechanism 14 connected to a syringe realizes the automation of the washing, elution, and collection processes in the screening, and the entire experimental process is highly automated, making the experiment more standardized and unified.

In the description of the present invention, it is appreciated that terms such as "center", "longitudinal", "transverse", "length", "width", "thickness", "up", "down", "front", "rear", "left", "right", "vertical", "horizontal", "top", bottom", "inner", "outer", "clockwise", "counterclockwise", "axial", "radial", "circumferential" and other directional or positional indications are based on the orientations or position shown in the accompanying drawings. They are merely used to facilitate the description of the present invention as well as to simplify the description. These terms do not suggest or imply that the platform or elements indicated must have specific orientations, or be constructed or operated in specific orientations. Therefore, these terms should not be construed as limiting the present invention.

Moreover, the terms "first" and "second" are used for descriptive purposes only and do not indicate or imply relative importance or suggest a specific quantity of the indicated technical features. Therefore, features defined with "first" or "second" may explicitly or implicitly include at least one such feature. In the description of the present invention, the term "plurality" means at least two, for example, two, three, etc., unless explicitly specified otherwise.

In the present invention, unless explicitly specified and defined otherwise, terms such as "mounting", "connection", and "fixation" should be broadly interpreted. For example, they could denote fixed connections, detachable connections, or integral connections. They could represent mechanical connection, electrical connection, or communication among themselves. They could mean direct connection or indirect connection through intermediation. They could denote intercommunication between two elements or the interactive relationship between two elements unless specifically defined otherwise. For those of ordinary skill in the art, the specific meanings of the terms described above in the present invention can be understood according to the specific circumstances.

In the present invention, unless explicitly specified and defined otherwise, the first feature "above" or "below" the second feature may indicate direct contact between the first and second features, or indirect contact therebetween through an intermediation. Moreover, the first feature "above", "on", or "on top of" the second feature may indicate that the first feature is positioned directly or diagonally above the second feature, or simply represent that the horizontal level of the first feature is higher than the second feature. The first feature "below", "underneath", or "beneath" the second feature may indicate that the first feature is positioned directly or diagonally below the second feature, or simply represent that the horizontal level of the first feature is lower than the second feature.

In the present invention, terms such as "an embodiment", "some embodiments", "example", "a specific example", "some examples", or the like mean that a specific feature, structure, material, or characteristic described in reference to the embodiment or example is included in at least one embodiment or example of the present invention. In this specification, the schematic descriptions of the terms described above do not necessarily refer to the same embodiment or example. Moreover, the specific features, materials, structures, and other characteristics described may be combined in any one or more embodiments or examples in an appropriate manner. Moreover, various embodiments or examples and features of various embodiments or examples described in this specification can be combined by those skilled in the art to the extent that they do not contradict each other.

Although embodiments of the present invention are illustrated and described above, it will be appreciated that the above embodiments are exemplary and not to be construed as limiting the present invention. Variations, modifications, substitutions, and alterations can be made to the above embodiments by those of ordinary skill in the art within the scope of the present invention. Any modification, equivalent, improvement, and the like made without departing from the spirit and principle of the present invention shall fall within the protection scope of the present invention.

## Claims

1. An automated screening device, comprising:
a liquid storage mechanism (90), wherein the liquid storage mechanism (90) is formed with a first cavity (11), an incubation cavity (12), and multiple functional cavities (13);
an injection mechanism (15), wherein the injection mechanism (15) is provided with an injection cavity, wherein one end of the injection cavity is disposed in the first cavity (11);
a flow distribution mechanism connected to a bottom surface of the liquid storage mechanism (90) and configured to enable the injection cavity to be in communication with the incubation cavity (12) or the functional cavities (13); and
a switching mechanism (14), wherein the switching mechanism (14) is connected to the flow distribution mechanism and cooperating with the flow distribution mechanism to enable the injection cavity to be in communication with the incubation cavity (12) or the functional cavity (13) through the flow distribution mechanism.

2. The automated screening device according to claim 1, wherein the flow distribution mechanism comprises a bottom plate (60) and a flow distribution plate (70) disposed between the bottom plate (60) and the liquid storage mechanism (90); the switching mechanism (14) cooperates with the flow distribution plate (70) to enable the injection cavity to be in communication with to the incubation cavity (12) or the functional cavities (13) through the flow distribution mechanism.

3. The automated screening device according to claim 2, wherein the base plate (60) is formed with a mounting hole (61); the switching mechanism (14) is disposed in the mounting hole (61) and capable of rotating in the mounting hole (61), and the switching mechanism (14) is capable of rotating to enable the injection cavity to be in communication with to the incubation cavity (12) or the functional cavity (13) through the flow distribution plate (70).

4. The automated screening device according to claim 3, wherein the flow distribution plate (70) is provided with a first flow distribution structure (71) and a plurality of second flow distribution structures (72) surrounding the first flow distribution structure (71);
the injection cavity is in communication with the first flow distribution structure (71), the incubation cavity (12) is in communication with one of the second flow distribution structures (72), and the remaining second flow distribution structures (72) are communicated with the plurality of functional cavities (13) in one-to-one correspondence;
the switching mechanism (14) is capable of rotating to enable the first flow distribution structure (71) to be in communication with any one of the second flow distribution structures (72).

5. The automated screening device according to claim 4, wherein a sealing plate (73) is disposed between the flow distribution plate (70) and the base plate (60), and the sealing plate (73) is provided with a third flow distribution structure (731) and multiple fourth flow distribution structures (732) surrounding the third flow distribution structure (731); the third flow distribution structure (731) is communicated with the first flow distribution structure (71) in a corresponding manner, and multiple fourth flow distribution structures (732) are in communication with multiple flow distribution structures (72) in one-to-one correspondence;
the switching mechanism (14) makes the first flow distribution structure (71) to be in communication with to any one of the second flow distribution structures (72) by connecting the third flow distribution structure (731) with any one of the fourth flow distribution structures (732).

6. The automated screening device according to claim 5, wherein the first flow distribution structure (71) is a flow distribution hole or a flow distribution groove, and the second flow distribution structure (72) is a flow distribution hole or a flow distribution groove;
the third flow distribution structure (731) is a flow distribution hole or a flow distribution groove, and the fourth flow distribution structure (732) is a flow distribution hole or a flow distribution groove.

7. The automated screening device according to claim 5, wherein a width of the fourth flow distribution structure (732) is less than or equal to that of the second flow distribution structure (72), and a length of the fourth flow distribution structure (732) is less than or equal to that of the second flow distribution structure (72);
an end of the second flow distribution structure (72) is drop-shaped, circular, or elliptical.

8. The automated screening device according to any one of claims 5-7, wherein an elongated groove (141) is formed in an upper end surface of the switching mechanism (14); a first end of the elongated groove (141) is always in communication with the third flow distribution structure (731), and a second end of the elongated groove (141) is capable of being in communication with any one of the fourth flow distribution structures (732).

9. The automated screening device according to any one of claims 3-8, wherein an engaging groove (142) for connecting a rotation module (20) is formed in a lower end surface of the switching mechanism (14);
the switching mechanism (14) is disposed on a switching mechanism base (143) and is capable of rotating relative to the switching mechanism base (143); the switching mechanism base (143) is disposed in the mounting hole (61).

10. The automated screening device according to any one of claims 1-9, wherein the incubation cavity (12) is provided separately, and an accommodation space is formed around the incubation cavity (12);
the plurality of functional cavities (13) and the incubation cavity (12) are arranged around the first cavity (11);
at least some of the functional cavities (13) differ in dimension and volume.

11. The automated screening device according to any one of claims 1-9, wherein an incubation cavity rubber pad (16) covers the incubation cavity (12), and a first ventilation hole is formed in the incubation cavity rubber pad (16);
a functional cavity rubber pad (17) covers multiple functional cavities (13), multiple second ventilation holes are formed in the functional cavity rubber pad (17), and multiple second ventilation holes correspond one-to-one with multiple functional cavities (13).

12. The automated screening device according to any one of claims 1-9, wherein a filter membrane (121) is disposed at a bottom of the incubation cavity (12), and the filter membrane (121) is configured to support a filler and filter a liquid.

13. The automated screening device according to any one of claims 2-9, wherein the upper end surface of the switching mechanism (14) is coated with at least one layer of a hydrophobic sealing material, and a surface of the flow distribution plate (70) is coated with at least one layer of a hydrophobic sealing material.

14. An automated screening platform, comprising: the automated screening device according to any one of claims 1-13, a rotation module (20), a driving mechanism (30), a temperature control module (40), and an electronic control module (50).

15. An automated screening platform, comprising:
the automated screening device according to any one of claims 1-13;
a rotation module (20) in transmission connection with the switching mechanism (14) to control the switching mechanism (14) to rotate;
a driving mechanism (30) capable of clamping the injection mechanism (15) and driving the injection mechanism (15) to inject a liquid into or aspirate a liquid from the incubation cavity (12) or the functional cavities (13);
a temperature control module (40) capable of moving relative to the incubation cavity (12) and configured to heat the incubation cavity (12); and
an electronic control module (50) electrically connected to the rotation module (20), the driving mechanism (30), and the temperature control module (40) to control coordinated operation of the rotation module (20), the driving mechanism (30), and the temperature control module (40).
